# EUROPEAN PATENT APPLICATION

(11) **EP 4 322 495 A1**
(43) Date of publication of application: **14.02.2024**
(21) Application number: 22189283.9
(22) Date of filing: 08.08.2022
(51) Int. Cl.: H04L 47/38, H04L 1/00, H04L 47/10, H04N 19/142

(54) **METHOD AS WELL AS SYSTEM FOR TRANSMITTING DATA BY MEANS OF RADIO SIGNALS AND ADAPTING TRANSMISSION RATE OF ONE OR MORE ENTITIES BY MEANS OF DATA ENCODING**

(71) Applicant: Rohde & Schwarz GmbH & Co. KG, 81671 München (DE)
(72) Inventor: Goerig, Torsten, 81671 München (DE)
(74) Representative: Prinz & Partner mbB

(57) **Abstract**

The invention relates to a method of transmitting data by means of radio signals from at least one first entity (12), wherein the method comprises the steps of:
- Providing data to be transmitted by means of the first entity (12) which establishes at least one data source (14),
- Providing information concerning a data transmission rate for the first entity (12) by means of a data transmission rate manager (26),
- Adapting the data transmission rate dynamically based on the information of the data transmission rate manager (26) by means of an encoder (34) of the first entity (12), and
- Encoding the data to be transmitted by means of the encoder (34).

Further, a system (10) for transmitting data by means of radio signals is described.

## Description

The invention relates to a method of transmitting data by means of radio signals from at least one first entity. Further, the invention relates to a system for transmitting data by means of radio signals.

In the state of the art, several systems and methods are known that are used to transmit data by means of radio signals. For instance, radio communication between aircrafts and base stations take place by means of radio signals, wherein voice signals and/or travel information is transmitted by means of radio signals, generally spoken data.

In certain application, further data may also be transmitted in addition to voice signals, which requires higher data rates compared to voice signals. Therefore, a transmission capacity of a certain radio channel used for transmitting the respective data has to be taken into account in order to ensure that the data can be transmitted in an appropriate manner.

Depending on the respective scenario, the data to be transmitted may be scaled up or scaled down, which depends on the respective content of the data to be transmitted and/or other data sources using the same radio channel, thereby also using the same transmission capacity of the radio channel. In case of several parallel transmissions which each require a high data rate, errors and/or failures in the respective data transmissions may occur which shall be avoided.

Accordingly, there is a need for a method and a system, which ensure proper data transmission by means of radio signals.

The invention provides a method of transmitting data by means of radio signals from at least one first entity. The method comprises the steps of:
- providing data to be transmitted by means of the first entity, which establishes at least one data source,
- providing information concerning a data transmission rate for the first entity by means of a data transmission rate manager,
- adapting the data transmission rate dynamically based on the information of the data transmission rate manager by means of an encoder of the first entity, and
- encoding the data to be transmitted by means of the encoder.

Further, the invention provides a system for transmitting data by means of radio signals. The system comprises a first entity configured to transmit data with a data transmission rate by means of the radio signals, thereby establishing at least one data source. The first entity comprises an encoder that is configured to encode the data to be transmitted. The system comprises a data transmission rate manager configured to provide information concerning the data transmission rate for the first entity. The encoder is configured to adapt the data transmission rate dynamically based on the information of the data transmission rate manager.

The main idea of the invention is to use the data transmission rate manager that provides information concerning a data transmission rate to be used by means of the first entity for transmitting the respective data. The respective data transmission rate is dynamically adapted based on the respective information provided by the data transmission rate manager such that it is ensured to transmit the data in an appropriate manner, as the data transmission rate manager monitors the respective data transmission capacity available. This ensures that enough capacity is provided for respective data to be transmitted by means of the first entity via the radio signals.

The respective method and system generally ensure that several entities can be connected with each other, thereby establishing a radio network comprising radio participants that may exchange data among each other by means of radio signals. Data transmissions between different entities may be established, wherein hop networks may be used, e.g. a mobile ad hoc network (MANet).

Generally, the data is forwarded by means of radio signals from the first entity to a final entity that shall receive the respective data, wherein at least one intermediate entity may be used to forward the respective data in an appropriate manner. Accordingly, a (radio) transmission line is established between the first entity and the final entity, wherein the transmission line. A respective radio channel is stablished between two of the respective radio participants that communicate with each other such that the (radio) transmission line may be established by several radio channels. However, the respective radio channel(s) used for transmitting the data by means of the radio signals might be prone to failure or rather disturbed, for instance due to environmental circumstances like weather conditions, landscape conditions, e.g. mountains, and/or the distance between the entities communicating with each other.

The data transmission rate manager is enabled to take these circumstances into account in order to identify a certain bottleneck within the transmission line from the first entity to the final entity. Depending thereon, e.g. on a certain bottleneck within the transmission line, the data transmission rate manager may dynamically adapt the respective data transmission rate, thereby ensuring that the data is transmitted in an optimal manner.

Generally, the dynamic adaption of the data transmission rate ensures to react on changing (environmental) circumstances or even proactively change the data transmission rate due to upcoming changes of the (environmental) circumstances.

Furthermore, a dynamic forward error correction (FEC) may be implemented which typically restricts the transmission capacity. However, the dynamic adaption of the data transmission rate can be adapted to the dynamic forward error correction such that the data transmission rate follows the dynamic forward error correction, thereby ensuring improved error correction and appropriate data transmission by means of the radio signals simultaneously.

An aspect provides that the data transmission rate is adapted when the data to be transmitted is encoded. Alternatively or additionally, the encoder adapts at least one quality parameter, a resolution and/or a frame rate, thereby adapting the data transmission rate. Thus, the data transmission rate to be used can be adapted easily by adapting the quality parameter, particularly the one of an algorithm used by the encoder when processing the data to be transmitted. In fact, the quality parameter provides an indication of the quality of the processing by means of the encoder. Moreover, the resolution and/or the frame rate may be adapted in case of images and/or videos to be transmitted by means of the first entity. The respective adaption is done when encoding the data to be transmitted, which is done by the encoder of the first entity. Accordingly, the adaption of the data transmission rate is done by the first entity itself that establishes the data source, namely by the data source, as the data transmission rate is adapted when the data to be transmitted is encoded by means of the encoder of the first entity. Put differently, the data to be transmitted is encoded in an adapted manner, e.g. an adaption of the coding level, based on the information of the data transmission rate manager.

Further, a modulation may be adapted in order to dynamically adapt the data transmission rate used for transmitting the data by means of the radio signals.

In any case, the dynamic adaption of the data transmission rate is done live or rather on-the-fly, namely during an established radio transmission.

Moreover, the dynamic adaption may be done controlling a capturing device, e.g. a camera. Hence, the recording/capturing quality of the capturing device may be set, thereby adapting the quality of the data to be transmitted such that the data transmission rate is adapted dynamically.

Another aspect provides that the encoder compresses the data to be transmitted and/or removes data with lower priority from the data to be transmitted and/or delays data for later transmission, thereby adapting the data transmission rate. Hence, the encoder may adapt the (actual) data transmission rate by compressing the data to be transmitted in a lossy manner ("lossy compression"). However, the data compression may also relate to lossless data compression. In any case, the size of the data is reduced by means of the data compression. Depending on the kind of data to be transmitted, different compression methods may be applied. Additionally or alternatively, the data to be transmitted may comprise data having different prioritizations. The encoder may adapt the (actual) data transmission rate by only forwarding data with normal and/or high priority, thereby removing or rather postponing data with lower priority compared to the other data. This also results in an adaption of the (actual) data transmission rate. Furthermore, the data to be transmitted may be delayed partly. Thus, data can be delayed for later transmission. Again, the (actual) data transmission rate is adapted when delaying/postponing data for later transmission.

For instance, data may be compressed by means of a lossy data compression, where a trade-off between data quality and data transmission rate. When reducing the data transmission rate, the data quality may also decrease, resulting in visible and/or distracting artifacts/distortions. This may apply to image, audio and/or video data in a similar manner.

Furthermore, lossless data compression algorithms like run-length encoding or similar techniques may also take place in order to reduce the data size by eliminating redundancy.

In fact, the quality parameter of the algorithm, namely a compression/encoding algorithm, defines the quality of the algorithm applied to the data to be transmitted, namely the compression/encoding of the data to be transmitted.

For instance, an image/video having more or less blurred areas. Alternatively, the quality parameter may relate to compression noise, which may apply to video and/or audio data.

Generally, the encoder is enabled to compress the data to be transmitted, namely when the encoder processes the data to be transmitted. Accordingly, a data compression algorithm is used by the encoder when processing the data to be transmitted, wherein the respective type of compression algorithm used depends on the kind of data to be transmitted, e.g. audio, image and/or video data. In other words, a data compression takes place by means of the encoder. Put differently, the encoder is configured to perform a data compression on the data to be transmitted.

In general, the process of encoding data may also encompass data compression. Hence, the data to be transmitted may be compressed, partly removed and/or delayed when the data to be transmitted is encoded, thereby adapting the (actual) data transmission rate.

A further aspect provides that the data transmission rate manager automatically adapts the data transmission rate for the first entity. In particular, the data transmission rate manager automatically adapts the data transmission rate for the first entity based on information obtained concerning a maximum available data transmission rate of radio channel used by the first entity. Accordingly, a communication link or at least a control link between the data transmission rate manager and the first entity is established. Hence, the data transmission rate manager is enabled to provide the respective information concerning the data transmission rate to be used to the first entity which adapts the data transmission rate accordingly. Hence, the control link may be established via which the information is forwarded to the first entity.

Generally, the adaption of the data transmission rate, irrespective thereof if it takes place automatically or not, may be based on information obtained concerning the maximum available data transmission rate of the radio channel that is used by the first entity for transmitting the respective data. Thus, the data transmission rate manager is enabled to gather the respective information concerning the maximum available data transmission rate. The data transmission rate manager may obtain this information by itself or the data transmission rate manager receives the information from another component of the system.

In any case, the data transmission rate manager may adapt the data transmission rate to be used by the first entity automatically and dynamically based on the respective information. For instance, the data transmission rate manager makes the respective setting directly, thereby adapting the data transmission rate to be used, or the data transmission rate manager forwards the respective information to the first entity that processes the information obtained and adapts the data transmission rate on its own, but based on the information provided by the data transmission rate manager.

According to another aspect, several first entities are provided, which each provide data to be transmitted such that several data sources are provided. The data transmission rate manager provides information concerning the respective data transmission rates for the several first entities. Accordingly, the first entities each establish a respective data source that is configured to transmit data to a final entity that shall receive the respective data. The final entity may be the same for all of the different first entities. Alternatively, several final entities may be provided, wherein the first entities may transmit the data to different final entities. In general, this may depend on the kind of information and the data to be transmitted. Accordingly, the several first entities may use the same radio channel, thereby sharing the same data transmission capacity of the radio channel. However, the several first entities may also only partly use the same radio channel such that several different radio channels are used.

In any case, the data transmission rate manager is enabled to gather the information of the maximum available data transmission rate(s) of the radio channel(s) used by the several first entities. The data transmission rate manager processes the respective information in order to assign a respective data transmission rate to the several different first entities.

As mentioned above, the several first entities may share the same radio channel such that the entire data transmission capacity has to be shared by the several data sources, e.g. the several first entities.

The data transmission rate manager manages the overall data transmission capacity, namely the maximum available data transmission rate, such that each of the several first entities is enabled to transmit the respective data. The data transmission rate manager may manage the individual data transmission rates of the first entities such that the respective data transmission rates of the several first entities may differ from each other. The maximum available data transmission rate of the radio channel shall not be exceeded by the sum of the individual data transmission rates of the several first entities. Thus, appropriate communication or rather transmission of the data is guaranteed due to the data transmission rate manager.

In case of several radio channels, the data transmission rate manager takes the different radio channels and their corresponding maximum available data transmission rate or rather data transmission capacity into account when assigning the respective individual data transmission rates to the several first entities.

Again, the individual data transmission rates of the several first entities may be dynamically adapted depending on the (environmental) circumstances.

Furthermore, the information concerning the respective individual data transmission rates may be distributed within the (radio) network, namely the several entities. This ensures that the different entities, particularly the several first entities, are informed about the needs of the first entities, namely the radio participants within the radio network, with regard to the data transmission rates for transmitting the respective data via the radio signals.

Another aspect provides that the first entity comprises a recognition module that recognizes at least data fractions in the data to be transmitted. Particularly, the recognition module performs an initial analysis of the data to be transmitted with regard to the data transmission rate to be used for the data to be transmitted. The recognition module is used to initially analyze the respective data to be transmitted in order to verify whether the data comprises information of interest. Accordingly, the recognition module performs an analysis of the content of the data to be transmitted in order to verify whether the data fractions of the data to be transmitted comprise different content compared to previous data fractions.

For instance, the information of interest may correspond to a moving objet in video data transmitted, particularly compared to video data of a desert.

In case the recognition module identifies that information or rather content of high interest is encompassed, the recognition module may provide the respective information to the data transmission rate manager (automatically) such that the data transmission rate manager is informed about the respective content to be transmitted. Hence, the recognition module further analyzes that the content/information encompassed in the data to be transmitted should be transmitted by a certain data transmission rate in order to ensure that the content/information is forwarded to the final entity in an appropriate format, for instance with the appropriate quality parameter, resolution and/or frame rate, thereby ensuring that an operator of the final entity is enabled to also gather the information/content of high interest in an appropriate quality.

For instance, the recognition module automatically requests from the data transmission rate manager a higher data transmission rate for the first entity in order to transmit data fractions of interest with the higher data transmission rate. When informing the data transmission rate manager, the recognition module may (automatically) request a different data transmission rate from the data transmission rate manager, particularly a higher data transmission rate compared to the previous/actual one, in order to transmit the information of interest with a better quality, e.g. a higher resolution and/or less artifacts.

The previous/actual data transmission rate may be determined based on a defined time span, for instance the last second. In other words, it is not necessary to perform complex analysis in order to determine the previous/actual data transmission rate.

Particularly, the request is automatically granted if possible due to boundary conditions and/or the request has to be acknowledged by an operator manually. Thus, a bidirectional communication between the first entity and the data transmission rate manager may be stablished such that the first entity is also enabled to provide information, namely requests, that are processed by means of the data transmission rate manager.

In case the data transmission capacity of the radio channel allows for a higher data rate, the respective request may be automatically granted. In case the maximum available data transmission rate is already reached due to other first entities communicating on the same radio channel, a respective request may be forwarded to an operator, e.g. an operator of the data transmission rate manager and/or an operator of the final entity, who has to acknowledge the respective request manually. Then, the data transmission rate of another first entity has to be lowered in order to ensure that the maximum available data transmission rate of the radio channel is not exceeded.

Alternatively, the respective request of the first entity has to be acknowledged by an operator in any case.

According to another aspect, a control module is provided via which the data to be transmitted is controllable, e.g. a quality of the data, a zooming, and/or a switching between data sources. Particularly, a quality weighting and/or prioritization are/is set by means of the control module. An operator of the system is enabled to control the respective first entity, particularly the several first entities. In fact, the operator can control for each of the different first entities the respective data transmission rate to be used. In other words, a manual override of the data transmission rates assigned to the at least one first entity by means of the data transmission rate manager may be done by means of the control module, e.g. the operator that interacts with the control module.

For instance, the operator may identify that a certain first entity transmits data of high interest. Hence, the operator is enabled to control the data transmission rate of the specific first entity such that its data transmission rate is increased in order to ensure that the respective information/content encompassed in the respective data to be transmitted is forwarded to the final entity with a higher resolution, a better quality and/or with more details.

Besides this, the operator may toggle between different data sources, e.g. different data streams provided by the first entities, when using the control module such that information of at least one respective first entity is forwarded with a defined/set quality, namely data transmission rate.

Furthermore, the operator may set via the control module a respective quality weighting and/or a prioritization of different first entities. Depending on the respective application scenario, the operator my set that a certain first entity being in a particular area shall provide the data with the highest data transmission rate possible, thereby assigning the highest priority to this particular first entity.

Alternatively or additionally, a certain kind of data may be weighted differently such that video data may be transmitted with a higher data transmission rate compared to image data, thereby enabling the quality weighting. For instance, it may be set that video data is always transmitted with the highest quality available, for instance Ultra High Definition (UHD) or 8K. The other data streams may be lowered accordingly if necessary due to the data transmission capacity of the radio channel(s) used.

Moreover, the operator may add or remove data streams to be forwarded to the final entity. Hence, the operator may select at least one service, the data of which shall be transmitted from the respective first entity to the corresponding final entity.

A further aspect provides that a second entity is provided which comprises the data transmission rate manager and/or receives the data to be transmitted, thereby establishing the data sink. The second entity may correspond to the final entity that shall receive the data to be transmitted. Further, the second entity may correspond to an intermediate entity that is used for forwarding the data from the first entity to the final entity. Hence, the second entity may communicate with the several first entities in order to collect the respective data from the several first entities. Afterwards, the second entity may forward the data collected to the final entity, for instance a base station, or another intermediate entity, namely another second entity.

Generally, the data transmission rate manager may be associated to an entity that is also used in field, for instance the second entity. Hence, the data transmission rate manager may communicate with the several first entities.

However, the data transmission rate manager may be associated to any entity of the system, particularly in a dynamic manner. Accordingly, several entities may comprise the respective functionality of the data transmission rate manager such that the data transmission rate manager may be dynamically assigned to one of the several entities. This ensures that the respective communications between the data transmission rate manager and the (first) entities of interest can be ensured. Moreover, a redundancy is provided with regard to the functionality of the data transmission rate manager.

Another aspect provides an artificial intelligence module which takes upcoming scenarios into account, thereby establishing a predictive adaption of the data transmission rate. The artificial intelligence module may be part of the entity that comprises the data transmission rate manager. Alternatively, the artificial intelligence module may be part of the first entity. In any case, the artificial intelligence module may communicate with the data transmission rate manager, such that it forwards the respective information concerning upcoming scenarios, thereby enabling the data transmission rate manager to adapt a data transmission rate assigned to the first entity proactively, e.g. in a predictive manner. Hence, the data transmission rate may be adapted with respect to upcoming (environmental) circumstances that have an influence on the radio transmission.

Accordingly, the artificial intelligence module is enabled to predict the maximum available data transmission rate of the radio channel in the future.

The artificial intelligence module may also take a certain route of a mobile entity into account when predicting the maximum available data transmission rate, e.g. based on a combination of the route and environmental conditions associated with the route.

The predictive adaption of the data transmission rate ensures that the quality of the data received by the final entity may be maintained even though the environmental circumstances differ during the operation of the first entity.

In fact, the respective adaption, particularly the predictive adaption, of the data transmission rate is done in a certain time pattern, which depends on the time slots of the method used for radio transmission. For instance, a time-division multiplexing access (TDMA), a carrier-sense multiple access (CSMA) or a frequency-division multiple access (FDMA) method may be used for transmitting the data by means of the radio signals.

Moreover, the predictive adaption may also use a margin for the data transmission rate in order to avoid an abort of the signal transmission.

Furthermore, the artificial intelligence module may record and use historical data when performing the predictive adaption of the data transmission rate.

The data to be transmitted may comprise image data and/or video data. The first entity may comprise a camera, for instance a video camera, that captures images and/or videos, wherein the respective image and/or video data is encoded by means of the encoder of the first entity for transmitting the data by means of radio signals in an appropriate manner.

Moreover, global navigation satellite system (GNSS) data may be encompassed in the data to be transmitted. The first entity comprises a GNSS module that provides the respective GNSS data to be encompassed into the data to be transmitted.

An aspect also provides that the dynamic adaption of the data transmission rate is based on a statistical multiplexing and/or based on a minimum data transmission rate and/or maximum data transmission rate per data source. The individual data transmission rates of the first entities may be multiplexed with respect to the maximum available data transmission rate of the radio channel in a statistical manner. Accordingly, the available transmission data capacity of the radio channel(s) is distributed among the entities in an automatic manner. Alternatively or additionally, a minimum and/or maximum data transmission rate may be assigned to each data source, wherein the respective data transmission rate assigned may depend on the location of the first entity and/or the kind of data provide by the respective data source.

Generally, the first entity may also comprise several data sources since the first entity may forward different kinds of data, e.g. video data, image data, GNSS data and so on, wherein each of the different kinds of data is associated with a respective data source. Therefore, the data transmission rate may be adapted differently for the different data sources of the same first entity.

For instance, the first entity may comprise different cameras, e.g. an infrared camera, a video camera, and/or a high-resolution camera for images. Each of these different cameras correspond to a respective data source.

Another aspect provides that the data transmission rate manager is configured to obtain information concerning a maximum available data transmission rate of a radio channel used by the first entity. Particularly, the information is obtained by means of transmission parameter associated with a waveform of radio signals used for transmitting the data. The transmission parameter may be used to determine the maximum available data transmission rate of the radio channel, wherein the transmission parameter may relate to signal-to-noise ratio (SNR), (bit) error rate (BER), loss, delay, delay jitter and/or bandwidth.

The transmission parameter is indicative of the transmission quality of the radio channel(s) used.

In fact, the dynamic adaption of the data transmission rate may depend on the transmission quality.

Generally, each of the first entities provide a data stream, e.g. a video stream, that is transmitted by means of the radio signals, wherein the respective data transmission rate is dynamically adapted by means of the data transmission rate manager. Hence, the quality of the data transmitted can be adapted dynamically.

Moreover, a (dynamic) switching between different data streams may be enabled. In addition, an individual prioritizing of the different data streams is also possible.

Furthermore, the data may be transmitted between the different entities of the system.

The different entities may be mobile entities. Hence, the mobile entities are enabled to move within a certain area.

The entities may communicate with each other in a bidirectional manner.

In general, the respective entities, e.g. the first and second entities, may relate to unmanned aerial vehicles (UAVs), aircrafts, ships, vehicles and/or equipment carried by persons. The respective data may be transmitted from an UAV (first entity) to an aircraft (second entity and/or final entity), particularly from several UAVs to the aircraft.

The control module and/or the data transmission rate manager may be assigned to the second entity and/or the final entity. For instance, the control module and/or the data transmission rate manager are provided by the aircraft, e.g. an Airborne Early Warning and Control System (AWACS), which communicates with different other entities, namely the UAVs, ships, other aircrafts, vehicles, a base station.

The data transmission rate manager enables to transmit visual data, e.g. image data and/or video data, by means of the respective entities, wherein the data is transmitted by means of radio signals.

In general, the method and system may ensure that the quality of the data received by the final entity is maintained constant while adapting the data transmission rate, e.g. the bit rate.

Furthermore, the data transmission rate manager may be established by a cloud system, e.g. a decentralized data transmission rate manager. Particularly, the decision concerning the assignment of the individual data transmission rate(s) is done in a distributed manner. For instance, technologies of distributed ledger like blockchain may be used to decide which respective individual data transmission rate(s) are/is assigned.

In addition to the data transmission rate manager, the system may also comprise a service manager that is configured to manage different services. Hence, a data link is provided via which requests for certain services are obtained, e.g. a video data service and an infrared image service. The service manager handles the different service requests while interacting with the data transmission rate manager that assigns the individual data transmission rates to the different services.

A protocol like the dynamic link exchange protocol (DLEP) may be used by the entities.

The radio signals used may be associated with waveforms allowing data transmission rates up to 100 Mbit/s.

Depending on the respective scenario, as many as possible data streams, e.g. video streams and/or image streams, may be transferred simultaneously by adapting the individual data transmission rates accordingly.

Furthermore, the dynamic adaption of the at least one data transmission rate ensures that interruptions of the data streams can be prevented effectively, as the system and the method allow for reacting on changing transmission characteristics in a dynamic manner.

The data transmission rate manager performing the dynamic adaption is based on information from the respective waveform and its transmission parameters.

As mentioned above, the data transmission rate is adapted dynamically to the required data complexity, for instance a still picture requires a reduced data transmission rate compared to the one of a fast moving action content provided by video data.

Further aspects and advantages of the claimed subject matter will become more really appreciated, as they become better understood by reference to the following detailed description, when taken in conjunction with the accompanying drawings. In the drawings:
- Figure 1 schematically shows an overview of a system according to the invention,
- Figure 2 schematically shows an overview that illustrates the operation of the data transmission rate manager when dynamically adapting the data transmission rate of several first entities,
- Figure 3 shows an overview illustrating a method of transmitting data by means of radio signals according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter of the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

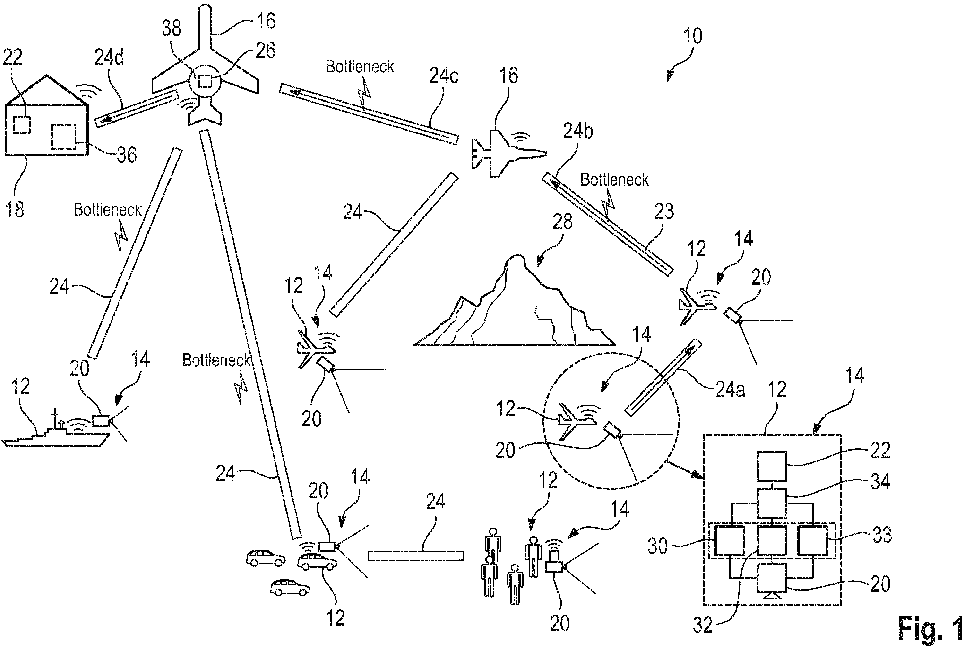

In Figure 1, a system 10 is shown that is used for transmitting data by means of radio signals.

In the shown embodiment, the system 10 comprises several first entities 12 that are configured to transmit data, thereby stablishing data sources 14.

Besides the first entities 12 that establish the data sources 14, the system 10 also comprises second entities 16 as well as a single final entity 18.

However, the system 10 may generally comprise several final entities 18 or only one second entity 16 or even no second entity. Moreover, the final entity 18 may be the second entity 16 simultaneously.

In any case, the first entities 12 that establishes the data sources 14 may be of different kind as illustrated in Figure 1. For instance, the first entities 12 may correspond to aircrafts, unmanned aerial vehicles (UAVs), landscape vehicles, ships, and/or equipment carried by humans.

In the shown embodiment, the first entities 12 each comprise at least one capturing device 20, e.g. a (video) camera, which is configured to capture data to be transmitted, for instance image data, video data and/or sound data. Besides the capturing device 12 stablished by a (video) camera, the first entity 12 may also comprise further devices or rather storage mediums that provide data that shall be transmitted by means of the first entities 12 via radio signals.

The first entities 12 may also comprise several different capturing devices 20, e.g. a video camera, a high resolution camera for images, and an infrared camera.

All of the different capturing devices 20 may be associated to a dedicated data source 14 such that a single first entity 12 may have several data sources 14 associated with the different capturing devices 20.

Each of the first entities 12 may communicate with each other or with the other entities, namely the second entities 16 or rather the final entity 18, by means of radio signals.

For this purpose, the first entities 12 comprise a radio module 22 that is configured to establish a radio communication with another entity.

In fact, each first entity 12 may establish a radio transmission line 23 to the final entity 18, wherein the radio transmission line 23 may encompass at least one additional entity, for instance another first entity 12 and/or at least one second entity. Between the different entities several radio channels 24 are established for transmitting the respective data to be transmitted as illustrated in Figure 1.

As shown in Figure 1, the first entity 12 that is encircled by the dashed line transmits its data via the radio transmission line 23 highlighted that comprises several radio channels 24 to the final entity 18. In fact, the data is transmitted to a neighbored first entity 12 via a first radio channel 24a, which together with its own data transmits the data via the next radio channel 24b to the second entity 16. The second entity 16 transmits the respective data received, e.g. all data received, to the neighbored second entity 16 via the radio channel 24c established between them. This second entity 16 transmits the respective data received via the radio channel 24d to the final entity 18.

The respective transmission line 23 comprises four different radio channels 24 established between different entities, namely radio participants of the respective radio network established by the entities of the system 10.

All of the different radio channels 24 have different properties due to different (environmental) circumstances, for instance landscape conditions, weather conditions, and/or the amount of data (streams) to be transmitted via the same radio channel 24 simultaneously.

Accordingly, the system 10 also comprises a data transmission rate manager 26 that is located within the second entity 16 that directly communicates with the final entity 18 in the sown embodiment.

The data transmission rate manager 26 is configured to provide information concerning a data transmission rate for the first entities 12 to be used in order to transmit the respective data. The data transmission rate manager 26 may obtain information concerning a maximum available data transmission rate of the respective radio channel(s) 24 used by the first entities 12.

In fact, the data transmission rate manager 26 may also gather the respective information concerning the several radio channels 24 involved when transmitting the data from the respective first entity 12 to the final entity.

As illustrated in Figure 1, some of the different radio channels 24 established between the radio participants of the radio network correspond to bottlenecks concerning their data transmission capacity due to different reasons.

For instance, environmental circumstances like mountains 28 may disturb the data transmission capacity of the respective radio channel 24b. Further, some of the radio channels 24b, 24c of the transmission line 23 are used for transmitting data of several first entities 12 simultaneously such that these radio channels 24b, 24c correspond to bottlenecks for other reasons, as their maximum available data transmission is almost reached or rather exceeded due to the several different data streams already present.

The data transmission rate manager 26 takes the respective information obtained into account in order to dynamically adapt the data transmission rate assigned to the first entities 12 such that no interruptions of the data streams take place.

In general, the first entities 12 may comprise a recognition module 30 that is configured to analyze the data to be transmitted by the respective first entity 12. Thus, the recognition module 30 may recognize at least data fractions in the data to be transmitted, thereby evaluating whether the data to be transmitted requires a higher data transmission rate or not. Put differently, the recognition module 30 may perform an initial analysis of the data to be transmitted with respect to the data transmission rate to be used for transmitting the respective data.

The recognition module 30 may forward automatically a respective request to the data transmission rate manager 26 to increase the data transmission rate for the respective first entity 12 such that data fractions of interest can be transmitted with a higher data transmission rate, thereby ensuring that the respective data is obtained by the final entity 18 with a better quality.

The respective request may be automatically processed by the data transmission rate manager 26. Hence, the data transmission rate manager 26 may automatically acknowledge the respective request provided that boundary conditions allow the higher data transmission rate, e.g. the data transmission capacity unoccupied of the respective radio channel(s) 24. If this cannot be allowed automatically, the respective request may have to be acknowledged by an operator in a manual manner, namely an operator of the data transmission rate manager 26 and/or an operator of the final entity 18.

Further, the first entities 12 may also comprise an artificial intelligence module 32 that takes upcoming scenarios into account, particularly based on the data captured by the capturing device 20 or rather by means of data stored in a storage medium 33, e.g. historical data and/or a route of the first entity 12.

The artificial intelligence module 32 may request adaption of the respective data transmission rate in a predictive manner by taking upcoming scenarios into account, thereby establishing a predictive adaption of the data transmission rate.

Alternatively, the artificial intelligence module 32 is located in the entity that comprises the data transmission rate manager 26, namely the second entity 16 in the shown embodiment.

The artificial intelligence module 32 may also be provided by the same entity that comprises the data transmission rate manager 26, e.g. the second entity 16 in the shown embodiment.

Generally, several of the entities 12, 16, 18 of the system 10 may comprise the respective functionality of the data transmission rate manager 26 in order to dynamically assign the respective functionality to one of the several entities 12, 16, 18 if required. Hence, a redundancy with respect to the dynamic data transmission rate adaption is ensured.

Moreover, the data transmission rate manager 26 may be distributed among several entities 12, 16, 18 that together decide on the assignment of the respective individual data transmission rates.

Moreover, the first entity 12 comprises an encoder 34 that is configured to encode the data to be transmitted by means of the radio module 24. Therefore, the encoding takes place in the first entity 12, wherein the data transmission rate adaption may also be done by means of the encoder 34 of the first entity prior to its transmission via the radio module 22.

Generally, the encoder 34 may compress the data to be transmitted in order to adapt the data transmission rate.

In addition, the data to be transmitted may comprise data having different priorities, e.g. low priority, medium priority, and high priority, wherein data with lower priority is removed from the data to be transmitted. Accordingly, only data with high priority or rather only data with medium and/or high priority is transmitted.

Furthermore, the encoder 34 may delay some data, for instance the data with low priority and/or medium priority, for later transmission so as to adapt the actual data transmission rate.

As shown in Figure 1, the system 10 also comprises a control module 36 via which the data to be transmitted can be controlled by an operator, for instance the quality of the data, a zooming and/or a switching between different data sources 14.

Moreover, the operator of the control module 36 may set a quality weighting and/or a prioritization of the different data sources 14 by means of the control module 36.

In the shown embodiment, the control module 36 is provided by the final entity 18. Hence, the respective settings done by means of the control module 36 may be forwarded via the radio channel 24 to the second entity 16 that comprises the data transmission rate manager 26.

Accordingly, the respective links provided between the different entities may relate to bidirectional links such that data can be forwarded in both directions. Therefore, the respective data transmission rate manager 26 may take the data streams from the first entities 12 towards the final entity 18 into account, but also data streams towards the first entities 12 when determining the individual data transmission rates for the first entities 12 in a dynamic manner.

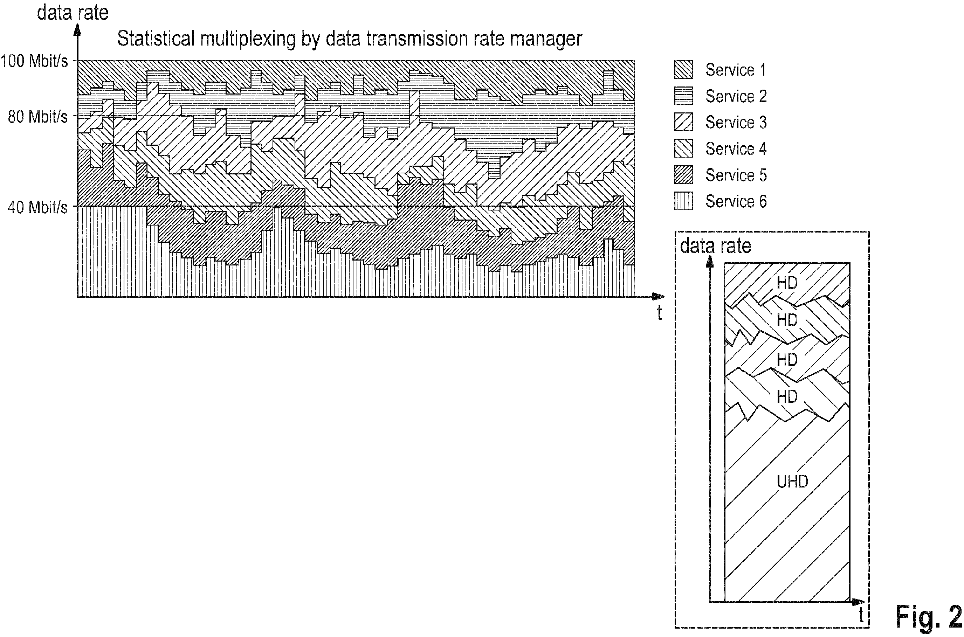

Generally, the data transmission rate manager 26 is enabled to perform a statistical multiplexing as shown in Figure 2 since the several first entities 12 may each be associated with different services as illustrated in Figure 2.

For instance, each of the several first entities 12 may be assigned to a single service. However, a single first entity 12 may also be assigned to two or more different services, e.g. providing video data, providing infrared images, and/or providing Ultra High Definition (UHD) and/or 8K images.

In the shown embodiment, the maximum available data transmission rate is 100 Mbit/s, wherein this transmission rate capacity is shared by the different services associated with the first entities 12 using the same radio channel 24 simultaneously.

As shown in Figure 2, the data transmission rate manager 26 dynamically adapts the individual data transmission rates associated to the different services while ensuring that the overall transmission rate capacity of the radio channel 24 is used to its maximum.

In fact, quality weighting and prioritization of a certain data source 14 is shown in Figure 2 as well since one service, e.g. the one of the certain data source 14, is assigned to the highest possible data transmission rate, thereby ensuring video data transmission in Ultra High Definition (UHD), whereas the other services using the same radio channel 24 may be assigned to High Definition (HD). For instance, the video data transmitted in UHD may be assigned to a data transmission rate of 10 to 20 Mbit/s. In addition to the UHD video stream, the respective service may also encompass additional data to be transmitted simultaneously such that the single service may use a data transmission rate up to 40 Mbit/s, as illustrated in Figure 2.

The respective quality weighting and prioritization may be done automatically by means of the respective first entities 12 when analyzing the data to be transmitted, e.g. the information/content encompassed with the data to be transmitted.

Alternatively, the operator may set the respective quality weighting and prioritization via the control module 30 in order to ensure that the selected service of the respective data source 14 is prioritized accordingly.

However, this is not required in case that only few services are available which may provide information/content of low interest. Hence, data transmission rates may be assigned to these services that together are below the maximum available data transmission rate of the radio channel 24.

For instance, the system 10 may also comprise a service manager 38 that manages different services, e.g. service requests from the at least one final entity 18 that shall receive the data from the first entities 12.

Hence, a data link from the at least one final entity 18 is provided to the entity having the service manager 38 via which the respective requests for certain services are obtained, e.g. a video data service and a high resolution image service. The service manager 38 handles the different service requests while interacting with the data transmission rate manager 26 that assigns the individual data transmission rates to the different services.

In the shown embodiment, the service manager 38 is provided in the same entity as the data transmission rate manager 26, namely within the second entity 16. However, the service manager 38 may also be provided in another entity that communicates with the one having the data transmission rate manager 26.

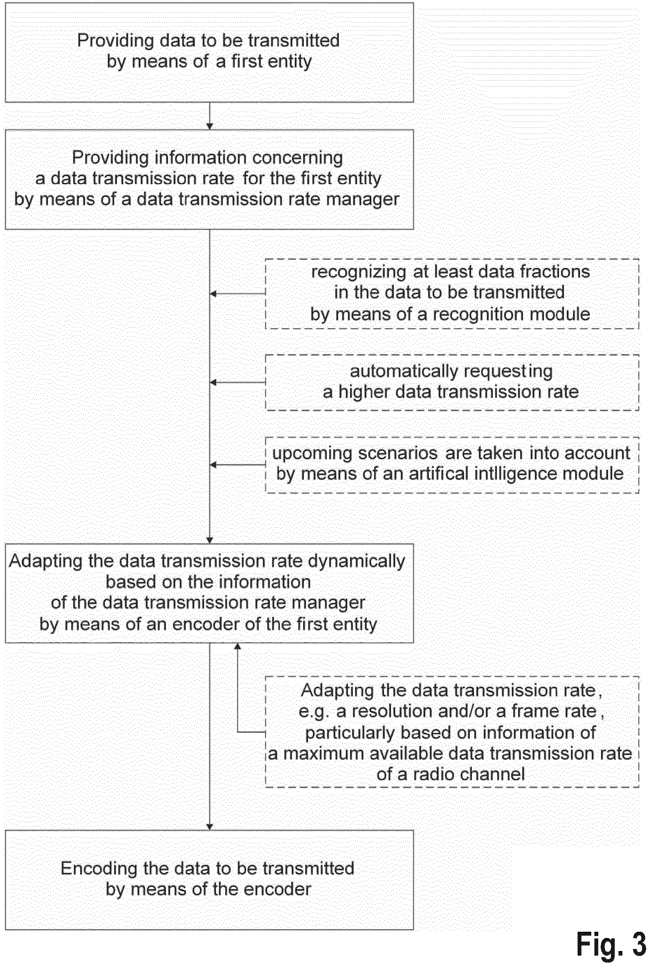

The system 10 shown in Figure 1 is generally enabled to perform the method as illustrated in Figure 3.

Accordingly, the respective first entities 12 may capture data to be transmitted, for instance by means of their capturing device(s) 20.

The data transmission rate manager 26 obtains information concerning the maximum available data transmission rate of the respective radio channel(s) 24 used by the first entities 12 to transmit the data captured to the final entity 18. Among others based on this information, the data transmission rate manager 26 provides information to the first entities 12 with respect to the individual data transmission rates to be used by the first entities 12 to transmit the data.

Besides the quality of the radio channel(s) 24 involved in the radio transmission, e.g. the information concerning the maximum available data transmission rate of the respective radio channel(s) 24, the data transmission rate manager 26 may also take any upcoming scenarios into account which have been communicated by means of the artificial intelligence module 32. Moreover, information obtained when analyzing data fractions of the data to be transmitted, which is done by the recognition module 30, may also be taken into account when determining the individual data transmission rates to be used by the first entities 12.

Then, the individual data transmission rates to be used by the first entities 12 are transmitted to the first entities 12. The data transmission rate manager 26 may directly set the individual data transmission rates or rather provide respective information that is processed by the first entities 12, thereby setting the individual data transmission rates on their own.

The adaption may be done by adapting at least one quality parameter, the resolution and/or a frame rate of the data to be transmitted, which inter alia depends on the kind of data to be transmitted. Depending on the kind of data to be transmitted, a different encoding/compression algorithm may be applied by the respective encoder(s) 34, wherein a respective quality parameter of the algorithm may be adapted in order to adapt the data transmission rate accordingly. In other words, the dynamic adaption may also cause the capturing device(s) 20 to apply different settings when capturing the respective data to be transmitted.

In fact, the data transmission rate adaption that takes place dynamically is done by the data sources 14 themselves, namely the first entities 12, particularly their encoders 34.

The respective encoded data is forwarded to the radio module 22 that transmits the data by means of radio signals.

Hence, the dynamic data transmission rate adaption may be done when encoding the data to be transmitted. Hence, the coding level and/or a modulation may be adapted by the respective encoders 34.

Accordingly, the data transmission rate manager 26 adapts the data transmission rate to be used by the first entities 12 automatically and dynamically based on the respective information obtained.

This ensures that all requested information/content can be transmitted without interruptions in the desires quality.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A method of transmitting data by means of radio signals from at least one first entity (12), wherein the method comprises the steps of:
- Providing data to be transmitted by means of the first entity (12) which establishes at least one data source (14),
- Providing information concerning a data transmission rate for the first entity (12) by means of a data transmission rate manager (26),
- Adapting the data transmission rate dynamically based on the information of the data transmission rate manager (26) by means of an encoder (34) of the first entity (12), and
- Encoding the data to be transmitted by means of the encoder (34).

2. The method according to claim 1, wherein the data transmission rate is adapted when the data to be transmitted is encoded and/or wherein the encoder (34) adapts a quality parameter, a resolution and/or a frame rate, thereby adapting the data transmission rate.

3. The method according to claim 1 or 2, wherein the encoder compresses the data to be transmitted and/or removes data with lower priority from the data to be transmitted and/or delays data for later transmission, thereby adapting the data transmission rate.

4. The method according to any of the preceding claims, wherein the data transmission rate manager (26) automatically adapts the data transmission rate for the first entity (12), particularly based on information obtained concerning a maximum available data transmission rate of a radio channel (24) used by the first entity (12).

5. The method according to any of the preceding claims, wherein several first entities (12) are provided which each provide data to be transmitted such that several data sources (14) are provided, and wherein the data transmission rate manager (26) provides information concerning the respective data transmission rates for the several first entities (12).

6. The method according to any of the preceding claims, wherein the first entity (12) comprises a recognition module (30) that recognizes at least data fractions in the data to be transmitted, in particular wherein the recognition module (30) performs an initial analysis of the data to be transmitted with regard to the data transmission rate to be used for the data to be transmitted.

7. The method according to claim 5, wherein the recognition module (30) automatically requests from the data transmission rate manager (26) a higher data transmission rate for the first entity (12) in order to transmit data fractions of interest with a higher data transmission rate, in particular wherein the request is automatically granted if possible due to boundary conditions and/or wherein the request has to be acknowledged by an operator manually.

8. The method according to any of the preceding claims, wherein a control module (36) is provided via which the data to be transmitted is controllable, e.g. a quality of the data, a zooming, and/or a switching between data sources (14), in particular wherein a quality weighting and/or prioritization are/is set by means of the control module (36).

9. The method according to any of the preceding claims, wherein a second entity (16) is provided that comprises the data transmission rate manager (26) and/or receives the data to be transmitted, thereby establishing a data sink.

10. The method according to any of the preceding claims, wherein an artificial intelligence module (32) is provided which takes upcoming scenarios into account, thereby establishing a predictive adaption of the data transmission rate.

11. A system for transmitting data by means of radio signals, wherein the system (10) comprises a first entity (12) configured to transmit data with a data transmission rate by means of the radio signals, thereby establishing at least one data source (14), wherein the first entity (12) comprises an encoder (34) that is configured to encode the data to be transmitted, wherein the system (10) comprises a data transmission rate manager (26) configured to provide information concerning the data transmission rate for the first entity (12), and wherein the encoder (34) is configured to adapt the data transmission rate dynamically based on the information of the data transmission rate manager (26).

12. The system according to claim 11, wherein the dynamic adaption of the data transmission rate is based on a statistical multiplexing and/or based on a minimum data transmission rate and/or maximum data transmission rate per data source (14).

13. The system according to claim 11 or 12, wherein the data transmission rate manager (26) is configured to obtain information concerning a maximum available data transmission rate of a radio channel (24) used by the first entity (12), in particular wherein the information is obtained by means of transmission parameter associated with a waveform of radio signals used for transmitting the data.

14. The system according to any of claims 11 to 13, wherein the system (10) comprises at least one second entity that (16) comprises the data transmission rate manager (26) and/or that is configured to receive the data transmitted by the first entity (12), thereby establishing a data sink.

15. The system according to any of claims 11 to 14, wherein a control module (36) is provided via which the data to be transmitted is controllable, e.g. a quality of the data, a zooming, and/or a switching between data sources, in particular wherein a quality weighting and/or prioritization are/is set by means of the control module (36).
